# EUROPEAN PATENT APPLICATION

(11) **EP 2 653 970 A1**
(43) Date of publication of application: **23.10.2013**
(21) Application number: 10860696.3
(22) Date of filing: 15.12.2010
(51) Int. Cl.: G06F 12/00

(54) **DATA TRANSFER PROGRAM, COMPUTER, AND DATA TRANSFER METHOD**

(71) Applicant: Fujitsu Limited, Kawasaki-shi, Kanagawa 211-8588 (JP)
(72) Inventor: DOI, Tsunehisa, Kawasaki-shi Kanagawa 211-8588 (JP)
(74) Representative: HOFFMANN EITLE
(86) International application number: PCT/JP2010/072583
(87) International publication number: WO 2012/081099

(57) **Abstract**

A computing device (101) selects an arbitrary memory block (110-i) from among memory blocks (110-1 to 110-4) that form a source-side memory (110). The computing device (101) transmits to a computing device (102) a hash value (hi) of data (di) of the memory block (110-i). The computing device (102) compares a hash value (Hj) of data (Dj) stored in a memory block (120-j) with the hash value (hi) of the data (di) for each memory block (120-j) that forms destination-side memory (120). The computing device (102) transmits a result of the comparison to the computing device (101). The computing device (101) determines the necessity of the copying of the data (di) to the destination-side storage area (120). The computing device (101) transmits the data (di) to the computing device (102) when the copying of the data (di) is necessary.

## Description

### TECHNICAL FIELD

The embodiments discussed herein are related to a data migration program, a computing device, and a data migration method.

### BACKGROUND ART

In live migration, a virtual machine running on hardware is moved to other hardware almost without a halt. Thus, an operating system (OS) or an application being executed by the virtual machine on the hardware can be moved to other hardware with a very short suspension. Therefore, live migration is used so that maintenance work of hardware is done while services continue.

As an example of related arts, there is a technique for memory sharing between virtual machines running on one physical computing device (see for example, Patent Document 1 below). Further, there is a technique for dynamically changing a physical resource configuration and a virtual device configuration under a virtualized environment (see for example Patent Document 2 below).

Patent Document 1: Japanese Laid-open Patent Publication No. 2010-33206
Patent Document 2: Japanese Laid-open Patent Publication No. 2008-225546

### DISCLOSURE OF INVENTION

### PROBLEM TO BE SOLVED BY THE INVENTION

However, according to the related arts above, the content of memory allocated to the virtual machine subject to migration is copied to the destination-side hardware, resulting in an increase in the amount of data transferred between hardware.

To solve the problems above, an object of the embodiments is to provide a data migration program, a computing device, and a data migration method that prevent unnecessary data copying between computing devices and reduce the amount of data transferred between the devices.

### MEANS FOR SOLVING PROBLEM

To solve the problems above and achieve an object, the disclosed data migration program, computing device, and data migration method receive from a source-side computing device, a hash value of source-side data stored in one memory block that forms a source-side memory; compare for each memory block forming a destination-side memory, a hash value of destination-side data stored in the memory block and the received hash value of the source-side data; transmit a yielded comparison result to the source-side computing device; and receive from the source-side computing device, the source-side data from which the hash value that does not match the hash value of the destination-side data is calculated.

Further, the disclosed data migration program, computing device, and data migration method transmit for each memory block that forms source-side memory, a hash value of the source-side data stored in the memory block to the destination-side computing device; receive from the destination-side computing device, a result of comparison between the transmitted hash value of the source-side data and hash values of each destination-side data stored in each memory block forming destination-side memory; determine necessity of copying the source-side data to the destination-side memory based on the received result of comparison; and transmit the source-side data to the destination-side computing device when the copying is determined to be necessary.

Further, the disclosed data migration program, computing device, and data migration method transmit hash values of destination-side data stored in memory blocks that forms destination-side memory to a source-side computing device; and receive from the source-side computing device, the source-side data whose hash value does not match the hash values of the destination-side data.

Further, the disclosed data migration program, computing device, and data migration method receive from a source-side computing device, hash values of destination-side data stored in memory blocks that form destination-side memory; comparing for each memory block that form source-side memory, a hash value of source-side data stored in each memory block and the received hash values of the destination-side data; determine necessity of copying the source-side data to the destination-side memory based on a result of comparison; and transmit the source-side data to the destination-side computing device when the copying is determined to be necessary.

Further, the disclosed data migration program, computing device, and data migration method determine for each memory block that forms source-side memory and based on attribute information of source-side data stored in the memory blocks, necessity of copying the source-side data to destination-side memory; and transmit the source-side data to a destination-side computing device when the copying is determined to be necessary.

### EFFECT OF THE INVENTION

The data migration program, computing device, and data migration method prevent unnecessary data copying between computing devices and reduce the amount of data transferred between the devices.

### BRIEF DESCRIPTION OF DRAWINGS

FIG. 1 is a diagram depicting one example of a data migrating scheme according to the first embodiment;
FIG. 2 is a diagram depicting one example of a hardware configuration of a server according to the second embodiment;
FIG. 3 is a diagram depicting one example of a network system according to the second embodiment;
FIG. 4 is a diagram depicting one example of a memory management table (part I);
FIG. 5 is a diagram depicting a functional configuration of a server according to the second embodiment;
FIG. 6 is a diagram depicting one example of a hash table (part I);
FIG. 7 is a diagram depicting one example of live migration;
FIG. 8 is a diagram depicting one example of a memory management table (part II);
FIG. 9 is a diagram depicting one example of a hash table (part II);
FIG. 10 is a diagram depicting one example of common storage that stores source-side data and destination-side data;
FIG. 11 is a flowchart depicting a data migration process of the source-side server according to the second embodiment;
FIG. 12 is a flowchart depicting one example of a data migration process on the destination-side server according to the second embodiment (part I);
FIG. 13 is a flowchart depicting one example of a data migration process on the destination-side server according to the second embodiment (part II);
FIG. 14 is a flowchart depicting one example of a data migration process on the destination-side server according to the second embodiment (part III);
FIG. 15 is a diagram depicting one example of a memory block table;
FIG. 16 is a diagram depicting a functional configuration of a server according to the third embodiment; and
FIG. 17 is a flowchart depicting one example of a data migration process of a server according to the third embodiment.

### BEST MODE(S) FOR CARRYING OUT THE INVENTION

With reference to the accompanying drawings, preferred embodiments of a data migrating program, a computing device, and a data migrating method are described.

### (First embodiment)

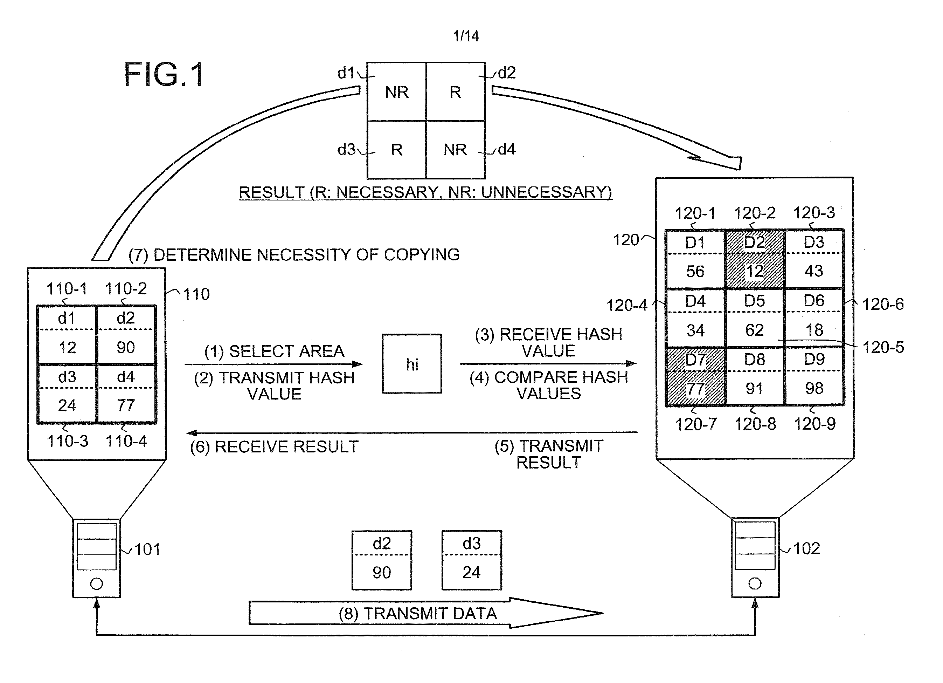

FIG. 1 is a diagram depicting one example of a data migrating scheme according to the first embodiment. In the first embodiment, the necessity of copying source-side data stored in a memory block is checked beforehand for each memory block of source-side memory. As a result, unnecessary migration of source-side data for which copying is not needed is prevented.

In FIG. 1, computing devices 101, 102 are computers that have a function of migrating data between computing devices. The computing device 101 is a source-side computing device that includes source-side memory 110. The computing device 102 is a destination computing device that includes destination memory 120.

The memory 110 is sectioned according to given data units and divided into memory blocks 110-1 to 110-4. The data unit can be set arbitrarily. For example, the memory 100 is sectioned into units of megabytes, pages, or blocks. One page equals, for example, 4 to 64 KB (kilobyte). One block is, for example, a group of pages.

In FIG. 1, the memory blocks 110-1 to 110-4 forming the memory 110 store data d1 to d4 that are to be migrated. A memory block among the memory blocks 110-1 to 110-4 is called "memory block 110-i" (i=1, 2, 3, 4). Data stored in a memory block 110-i is called "data di".

The memory 120 is sectioned according to given data units and divided into memory blocks 120-1 to 120-9. The data unit in the memory 120 is identical to one in the memory 110.

In FIG. 1, the memory blocks 120-1 to 120-9 forming the memory 120 store data D1 to D9. A memory block among the memory blocks 120-1 to 120-9 is called "memory block 120-j" (j=1, 2, ..., 9). Data stored in a memory block 120-j is called "data Dj".

The data migration scheme according to the first embodiment is described blow. In this example, the data d1 to d4 stored in the memory blocks 110-1 to 110-4 of the source-side memory 110 are migrated to the destination memory 120.

(1) The source-side computing device 101 selects a memory block 110-i from among the memory blocks 110-1 to 110-4 forming the source-side memory 110. The selection process of the memory block 110-i is repeated until all memory blocks 110-1 to 110-4 have been selected.

(2) The source-side computing device 101 transmits to the destination computing device 102 a hash value (hereinafter "hash value hi") of data di stored in the memory block 110-i that has been selected.

The hash value is, for example, a fixed-length random number calculated by giving data as an argument to a hash function. The hash function is a function that generates a fixed-length pseudo-random number from data given as an argument. The length of the hash value is set arbitrarily as far as the hash value is shorter than the bit length of the data given.

(3) The destination computing device 102 receives the hash value hi of the data di from the source-side computing device 101.

(4) The destination computing device 102 compares the hash value hi of data di with a hash value (hereinafter "hash value Hj") of data Dj stored in the memory block 120-j. This process is performed for each memory block 120-j forming the destination memory 120. In the figure, part of the destination memory 120 is depicted.

The hash value indicates that when source-side data are different, the probability of obtaining the same hash value is very low. Therefore, it is determined whether data di and Dj are identical by the comparison of hash values hi and Hj of data di and Dj.

In FIG. 1, numerical values of 2 bits within a square that depicts memory blocks 110-i and 120-j represents hash values hi and Hj of data di and Dj. For example, the hash value of data d1 stored in the memory block 110-1 is 12. The hash value of data D1 stored in the memory block 120-1 is 56.

(5) The destination computing device 102 transmits to the source-side computing device 101, a result of comparison of the hash value hi of data di with the hash value Hj of data Dj. The result of comparison is information that indicates whether the hash value hi of data di has not matched hash values H1 to H9 of data D1 to D9 or has matched at least one hash values Hj among the hash values H1 to H9.

(6) The source-side computing device 101 receives from the destination computing device 102, the result of comparison of the hash value hi of data di with the hash values Hj of data Dj stored in each memory block 120-j that form the destination memory 120.

(7) The source-side computing device 101 checks the necessity of copying of data di to the destination memory 120, based on the result of comparison. When source-side data di is identical to destination data Dj, the copying of di to the destination memory 120 is not needed.

The source-side computing device 101 determines that the copying of data di to the destination memory 120 is not necessary when the hash value hi of data di matches at least one hash value Hj among the hash values H1 to H9 of data D1 to D9. On the other hand, when the hash value hi of data di does not match any of the hash values H1 to H9 of all data D1 to D9, the source-side computing device 101 determines that the copying of data di to the destination memory 120 is necessary.

In FIG. 1, the hash value "12" of source-side data d1 matches the hash value "12" of data D2 of destination-side data D2. Therefore, the source-side computing device 101 determines that the copying of data d1 to the destination-side memory 120 is not necessary. Further, the hash value "77" of source-side data d4 matches the hash value "77" of destination-side data D7. Therefore, the source computing device 101 determines that the copying of data d4 to the destination-side memory 120 is not necessary. The hash values of source-side data d2 and d3 do not match any of data D1 to D9. Therefore, the source-side computing device 101 determines that the copying of data d2 and d3 to the destination-side memory 120 is necessary.

(8) The source-side computing device 101 transmits data di stored in the memory block 110-i to the destination-side computing device 102 when the copying of data di is necessary.

In FIG. 1, it is determined that the copying of source-side data d2 and d3 is necessary and the copying of source-side data d1 and d4 is not necessary. In FIG. 1, "R" represents a result that copying is necessary and "NR" represents a result that copying is not necessary.

The source-side computing device 101 transmits data d2 and d3 of source-side data d1 to d4 to the destination-side computing device 102. As a result, source-side data d2 and d3 are written into vacant areas in the destination-side memory 120 of the destination-side computing device 102. With respect to source-side data d1 and d4 that have not been transmitted from the source-side computing device 101, the destination-side computing device 102 copies data D2 and D7 whose hash values match the hash values of data d1 and 4 to vacant areas in the destination-side memory 120.

According to the data migrating scheme of the first embodiment described above, the necessity of copying of data di stored in the memory block 110-i is checked beforehand for each memory block 110-i forming the source-side memory 110. In this way, the migration of data d1 and d4 that need not be copied among migration data d1 to d4 is avoided and thus, the amount of data to be transferred between the computing devices 101 and 102 can be reduced.

### (Second embodiment)

The second embodiment applies the computing devices 101 and 102 of the first embodiment to servers SV (for example, servers SV1 and SV2 that will be described later). Descriptions identical to those of the first embodiment will be omitted.

### (Hardware configuration of server SV)

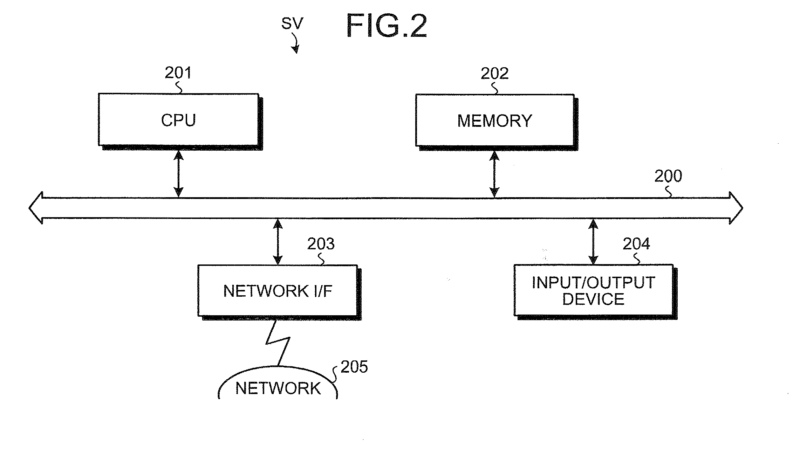

FIG. 2 is a diagram depicting one example of a hardware configuration of a server according to the second embodiment. In FIG. 2, a server SV includes a central processing unit (CPU) 201, memory 202, a network interface (I/F) 203, and an input/output device 204. These components are connected via a bus 200.

The CPU 201 governs overall control of the server. The memory 202 is, for example, a read-only memory (ROM) or a random access memory (RAM).

The network I/F 203 is connected via a communication line to a network 205 such as a local area network (LAN), a wide area network (WAN), and the Internet and is connected to other devices via the network 205. The I/F 203 governs the network 205 and the internal interface and controls the input/output of data to/from other computers. The network I/F 203 may be a modem or a LAN adaptor.

The input/output device 204 inputs and outputs data. The input/output device 204 may be a display device that displays data such as a text, an image, and functional information, or may be a keyboard for inputting letters, numerals, and various instructions. The server SV may be equipped with a storage device such as a magnetic disk or an optical disk.

A network system 300 containing the server SV according to the second embodiment will be described.

### (One example of network system 300)

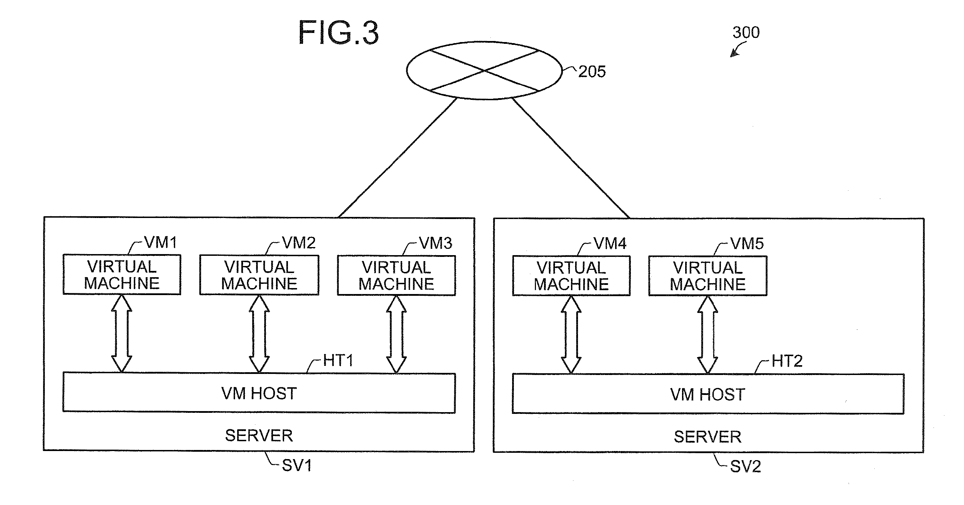

FIG. 3 is a diagram depicting one example of a network system according to the second embodiment. In FIG. 3, the network system 300 includes a server SV1 and a server SV2. The server SV1 and the server SV2 are connected via the network 205 in the network system 300 and communicate with each other.

The servers SV1 and SV2 include VM hosts HT1 and HT 2 and are computers that divide a hardware resource to establish multiple execution environments. The VM hosts HT1 and HT2 are software for virtualization of hardware resources (for example, the CPU 201, the memory 202, and the network I/F 203 in FIG. 2) of the servers SV1 and SV2 and for execution of multiple different operating systems. For example, the VM hosts HT1 and HT2 run OS's by means of virtual machines VM that operates under the execution environment that is built by the division of the hardware resources of the servers SV1 and SV2.

The virtual machine VM is a virtual computer that operates under the execution environment that is built by the division of the hardware resources of the servers SV1 and SV2. The virtual machine VM includes software such as a program and an OS, variables that are given to the software, and information that designates hardware resources for execution of the software.

In FIG. 3, three virtual machines VM1, VM2, and VM3 are operating under the execution environment built by the division of the hardware resource of the server SV1. The VM host HT 1 run different OS's with the virtual machines VM1 to VM3. Two virtual machines VM4 and VM5 operate under the execution environment built by the division of the hardware resources of the server SV2. The VM host HT2 run different OS's with the virtual machines VM4 and VM5.

Logical memory separated from physical memory of each of the servers SV1 and SV2 (hereinafter "physical memory PM1 and PM2") is allocated to the virtual machine VM. Each physical memory PM1 and PM2 of the servers SV1 and SV2 are, for example, the memory 202 depicted in FIG. 2. Memory of the virtual machine VM is sectioned according to page units and is divided into memory blocks. A page is data unit for the VM host HT1 and HT2 to manage the memory of the virtual machine VM.

Each memory block in the memory of the virtual machine VM corresponds to one of the memory blocks obtained by dividing the physical memory PM1 and PM2. Data stored in each memory block is content such as programs (OS, application), images, and sounds.

Over the network system 300, a virtual machine VM running on the server SV is migrated to another server SV for the purpose of the load distribution among servers SV or the maintenance of the server SV; this migration is called live migration. In the live migration, the content of the memory allocated to the virtual machine VM subject to migration, is copied to a destination-side server SV.

If all the contents of the memory allocated to the virtual machine VM are copied to the destination-side server SV, an increase in the amount of data transferred between servers SV occurs. Further, when data is copied to the memory 202 of the destination-side server SV, the data goes through the bus 200 of the destination-side server SV. As a result, the cost for transferring data becomes higher than the copying of data to a storage device that is connected to a source-side server via the network 205.

According to the second embodiment, the amount of data transferred is reduced by checking beforehand, for each memory block in the memory of the virtual machine VM, the necessity of the copying to the destination sever SV of data stored in memory blocks.

In the description below, a virtual machine VM running on a server SV is written as "virtual machine VMk". Memory allocated to a virtual machine VMk is written as "memory Mk". Memory blocks in the memory Mk are written as "memory blocks b1 to bn". A memory block of the memory blocks b1 to bn is written as "memory block bi" (i=1, 2, ..., n). Data stored in the memory block bi is written as "source-side data di".

Memory blocks in the physical memory PM of the destination-side server SV are written as "memory blocks B1 to Bm". Any memory block of the memory blocks B1 to Bm is written as "memory block Bj" (j=1, 2, ..., m). Data stored in the memory block Bj is written as "destination-side data Dj".

A memory management table used by each server SV will be described. The memory management table is information for a server SV to manage the memory Mk allocated to the virtual machine VMk running on the server. A memory management table 400 is taken as an example. The memory management table 400 is used to manage memory M3 allocated to a virtual machine VM3 running on the server SV1. The memory management table 400 is implemented by, for example, the memory 202 depicted in FIG. 2.

### (Content of memory management table 400)

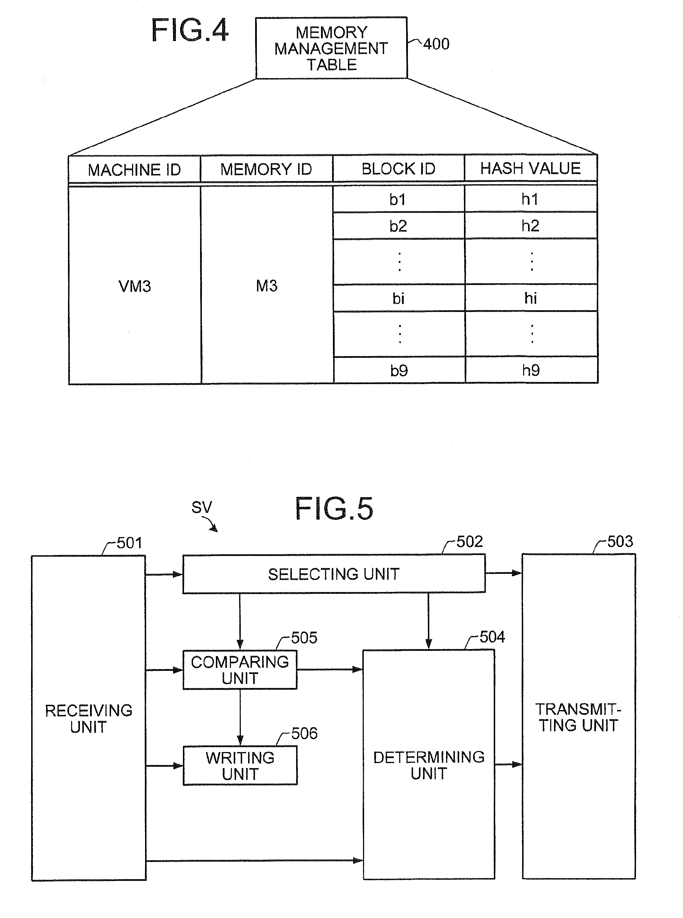

FIG. 4 is a diagram depicting one example of a memory management table (part I). In FIG. 4, the memory management table 400 includes fields of machine ID, memory ID, block ID, and hash value. Information is set to each field and the memory management data of the virtual machine VM3 are stored.

The machine ID is an identifier for a virtual machine VMk. The memory ID is an identifier for memory Mk allocated to the virtual machine VMk. The block ID is an identifier for a memory block bi in the memory Mk of the virtual machine VMk. The hash value is a hash value hi of source-side data di stored in the memory block bi.

With the memory management table 400, memory blocks b1 to b9 in the memory M3 allocated to the virtual machine VM3 can be identified. Further, with the memory management table 400, hash values h1 to h9 of source-side data d1 to d9 stored in the memory block b1 to b9 can be identified.

A functional configuration of a server SV (servers SV1 and SV2) according to the second embodiment will be described.

### (Functional configuration of server SV)

FIG. 5 is a diagram depicting a functional configuration of a server according to the second embodiment. In FIG. 5, the server SV includes a receiving unit 501, a selecting unit 502, a transmitting unit 503, a determining unit 504, a comparing unit 505, and a writing unit 506. Each component may be implemented by the CPU 201 executing a program stored in the memory 202 of FIG. 2 or by the network I/F 203. More specifically, for example, each component is implemented by the VM hosts HT1 and HT2 of FIG. 3. Results of processes performed at each component are stored in the memory 202.

In the live migration, the server SV acts as a source-side server SV that runs the virtual machine VMk subject to migration or as a destination-side server SV that accommodates the virtual machine VMk subject to migration. Processes performed by the components when the server SV acts as a source-side server SV are described first.

### Functional configuration of source-side server SV

The receiving unit 501 receives an instruction to migrate a virtual machine VMk. The instruction to migrate a virtual machine VMk is to instruct the migration of a virtual machine VMk running on the server to another server. The instruction to migrate a virtual machine VMk includes, for example, a machine ID of the virtual machine VMk and a sever ID of the destination-side server SV.

For example, the VM host HT1 of the server SV1 receives, from an external computer via the network 205, an instruction that instructs migration of the virtual machine VM3 to the server SV2. The VM host HT 1 may receive an instruction of the migration of the virtual machine VM3 by the operation of a user using the input/output device 204 of FIG. 2.

When the instruction to migrate the virtual machine VMk is received, the selecting unit 502 selects an arbitrary memory block bi from among memory blocks b1 to bn that form the memory Mk allocated to the virtual machine VMk. As an example, suppose that an instruction to migrate the virtual machine VM3 to the server SV2 has been received.

In this case, the VM host HT1 refers to, for example, the memory management table 400 of FIG. 4 and selects an arbitrary memory block bi from among memory blocks b1 to b9 of the memory M3 allocated to the virtual machine VM3. The selection process conducted by the selecting unit 502 is repeated until all memory blocks b1 to bn will have been selected.

The transmitting unit 503 transmits the hash value hi of the source-side data di stored in the selected memory block bi to the destination-side server SV. The hash value hi of the source-side data di is calculated, for example, by the VM host HT1 of the source-side server SV1 giving the source-side data di, as an argument, to a hash function.

The hash value hi of the source-side data di may be calculated after the selecting unit 502 has selected a memory block bi or when the source-side data di is stored or updated in the memory block bi. The calculated hash value hi of the source-side data di may be associated with the block ID of the memory block bi and is stored in the memory management table 400.

For example, the VM host HT1 refers to the memory management table 400 and specifies the hash value hi of the source-side data di stored in the selected memory block bi. The VM host HT1 transmits, via the network 205, the hash value hi of the specified source-side data di to the VM host HT2 of the destination-side server SV2 together with the block ID of the memory block bi.

The receiving unit 501 receives, from the destination-side server SV, a result of the comparison of the hash value hi of the source-side data di with the hash value Hj of the destination-side data Dj stored in each memory block 120-j that forms the destination-side physical memory PM.

The result of the comparison is information that indicates that the hash value hi of the source-side di does not match any of the hash values H1 to Hm of all the destination-side data D1 to Dm or matches at least one of the hash values Hj among the hash values H1 to Hm. The result of the comparison may represent results of each comparison of the hash value hi of the source-side data di with the hash value Hj of each destination-side data Dj.

For example, as a result of the transmission of the hash value hi of the source-side data di, the VM host HT1 receives, via the network 205, the results of the comparison of the hash value di of the source-side data di with the hash value Hj of each destination-side data Dj from the VM host HT2 of the destination-side server SV2.

The determining unit 504 determines, based on the result of the comparison, whether the copying of the source-side data di to the physical memory PM of the destination-side server SV is necessary. For example, when the hash value hi of the source-side data di matches at least one of the hash value Hj among the hash values H1 to Hm of the destination-side data D1 to Dm, the VM host HT1 determines that the copying of the source-side data di is not necessary. On the other hand, when the hash value hi of the source-side data di does not match any of the hash values H1 to Hm of the destination-side data D1 to Dm, the VM host HT1 determines that the copying of the source-side data di is necessary.

The transmitting unit 503 transmits, based on the result of the determination, the source-side data di to the destination-side server SV. For example, when it is determined that the copying of the source-side data di is necessary, the VM host HT1 transmits an instruction of the copying of the source-side data di to the VM host HT2 via the network 205. The instruction of the copying includes, for example, the block ID of the memory block bi and the source-side data di. On the other hand, when it is determined that the copying of the source-side data di is not necessary, the VM host HT1 does not transmit the source-side data di to the destination-side server SV2.

Processes performed by each functional component when the sever SV acts as a destination-side server are described next.

### Functional configuration of destination-side server SV

The receiving unit 501 receives, from the source-side server SV, the hash value hi of the source-side data di stored in the memory block bi for each memory block bi forming the source-side memory Mk. For example, the VM host HT2 of the server SV2 receives the hash value hi of the source-side data di from the VM host HT1 of the server SV1 via the network 205.

The comparing unit 505 compares the hash value hi of the source-side data di with the hash value Hj of the destination-side data Dj stored in the memory block Bj for each memory block Bj forming the destination-side physical memory PM. The hash value Hj of the destination-side data Dj is calculated, for example, by the VM host HT2 of the destination-side server SV2 giving the destination-side data Dj as an argument to a hash function.

The hash value hi of the source-side data di and the hash value Hj of the destination-side data Dj are calculated according to the identical algorithm (for example, the identical hash function). The hash value Hj of the destination-side data Dj may be calculated when the comparison process is executed by the comparing unit 505 or when the destination-side data Dj is stored or updated in the memory block Bj.

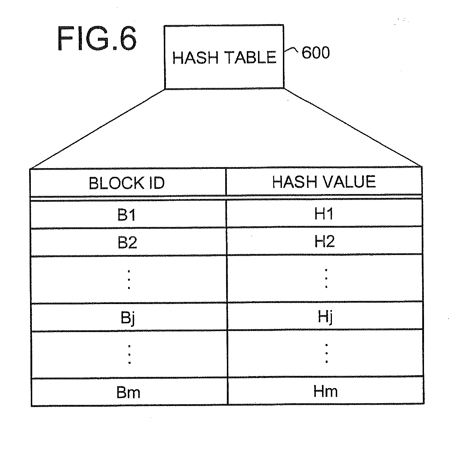

The hash value Hj of the destination-side data Dj is stored, for example, in a hash table 600 as depicted in FIG. 6. An example of the hash table 600 will be described. The hash table 600 is implemented by, for example, the memory 202.

FIG. 6 is a diagram depicting one example of a hash table (part I). In FIG. 6, the hash table 600 stores, for each memory block Bj forming the physical memory PM2 of the destination-side server SV2, hash values Hj of the destination-side data Dj stored in the memory block Bj.

For example, the VM host HT2 refers to the hash table 600 and compares the hash value hi of the source-side data di with the hash value Hj of the destination-side data Dj stored in the memory block Bj.

Return to FIG. 5. The transmitting unit 503 transmits a result of the comparison to the source-side server SV. For example, the VM host HT2 transmits the result of the comparison concerning the source-side data di to the VM host HT1 of the source-side server SV1 via the network 205.

The receiving unit 501 receives the source-side data di from the source-side server SV as a result of the transmission of the comparison result. For example, the VM host HT2 receives, from the VM host HT1, an instruction of the copying of the source-side data di from which the hash value hi has been calculated while the hash value hi has not matched any of the hash values H1 to Hm of the destination-side data D1 to Dm.

The writing unit 506 writes the source-side data di into the destination-side physical memory PM. For example, when the instruction of the copying of the source-side data di is received, the VM host HT2 writes the source-side data di of the memory block bi included in the instruction into an available area of the destination-side physical memory PM.

As a result, the source-side data di is copied into an available area of the destination-side physical memory PM in the destination-side server SV2 and thus the memory block bi of the virtual machine VMk is created.

The writing unit 506 writes into the destination-side physical memory PM the destination-side data Dj from which the hash value Hj has been calculated while the hash value Hj has matched the hash value hi of the source-side data di. For example, the VM host HT2 reads out from the memory block Bj the destination-side data Dj from which the hash value Hj has been calculated while the hash value Hj has matched the hash value hi of the source-side data di, and writes the destination-side data Dj into an available area of the destination-side physical memory PM.

As a result, the destination-side data Dj from which the hash value Hj has been calculated while the hash value Hj has matched the hash value hi of the source-side data di is copied into an available area of the destination-side physical memory PM in the destination-side server SV2, and the memory block bi of the virtual machine VMk is created.

In the description above, the destination-side server SV has compared the hash value hi of the source-side data di with the hash value Hj of the destination-side data Dj but the embodiments are not restricted to this example. For example, the source-side VM host HT1 requests the destination-side VM host HT2 to send the hash value Hj of the destination-side data Dj and receives the hash value Hj of the destination-side data Dj (for example, the content of the hash table 600) from the VM host HT2.

The source-side VM host HT1 may compare the hash value hi of the source-side data di with the hash value Hj of the destination-side data Dj in this way. In this case, the source-side VM host HT1 determines, based on the result of comparison of the hash value hi of the source-side data di with the hash value Hj of the destination-side data Dj, whether to copy the source-side data di to the destination-side physical memory PM2.

When the copying of the source-side data di is not necessary, the destination-side VM host HT2 does not know the block ID of the memory block Bj of the destination-side data Dj that matches the hash value of the source-side data di. Thus, the VM host HT1 transmits to the destination-side VM host HT2, together with the block ID of the memory block bi of the source-side data di, the block ID of the memory block Bj of the destination-side data Dj from which the hash value Hj has been calculated while the hash value Hj has matched the hash value hi of the source-side data di.

As a result, the destination-side data Dj from which the hash value Hj has been calculated while the hash value Hj has matched the hash value hi of the source-side data di is copied into an available area of the destination-side physical memory PM in the destination-side server SV2, and the memory block bi of the virtual machine VMk is created.

A context switch of a program being executed by the virtual machine VMk may be performed right after the migration instruction of the virtual machine VMk or after the memory blocks b1 to bn of the virtual machine VMk are created in the destination-side physical memory PM.

The context is information concerning a state (for example, a value of a register of the CPU 201) of a program being executed by the virtual machine VMk. The context switch is performed by, for example, the source-side VM host HT1 copying a value of a register of the CPU 201 allocated to the virtual machine VMk to the CPU 201 of the destination-side server SV2.

One example of live migration will be described where the virtual machine VM3 running on the server SV1 is migrated to the server SV2.

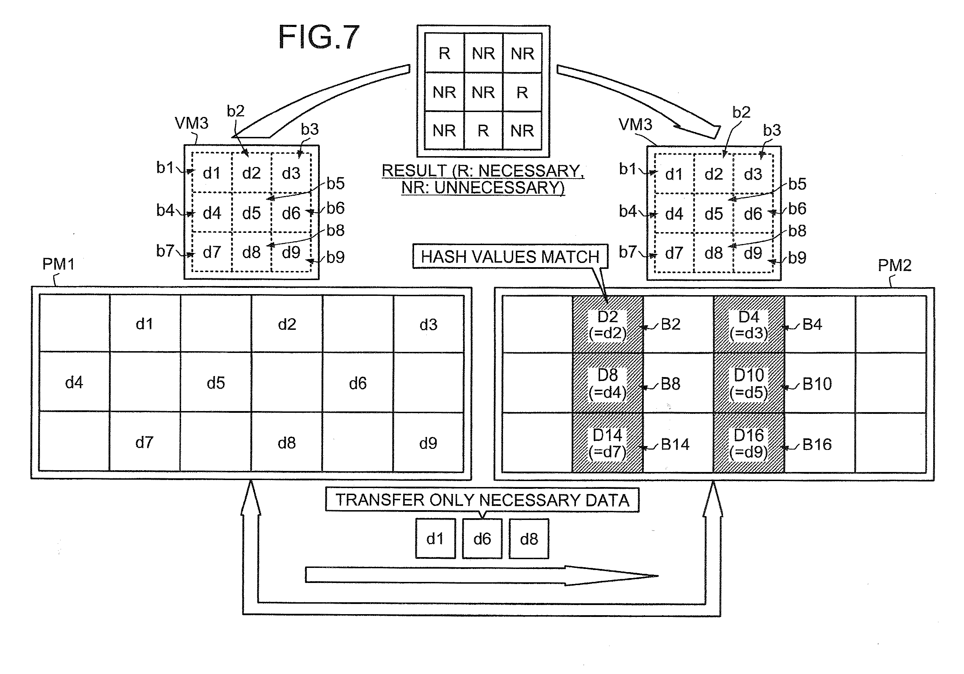

FIG. 7 is a diagram depicting one example of live migration. In FIG. 7, the source-side data d1, d6, and d8 need be copied among the source-side data d1 to d9 of the memory blocks b1 to b9 forming the memory M3 of the virtual machine VM3. The source-side data d2 to d5, d7 and d9 need not be copied.

In this case, the VM host HT1 transmits an instruction of the copying of the source-side data d1, d6, and d8 the copying of which are necessary to the destination-side VM host HT2. The VM host HT2 writes the source-side data d1, d6, and d8 into an available area of the physical memory PM2. In this way, the source-side data d1, d6, and d8 are copied into an available area of the physical memory PM2, and the memory blocks b1, b6, and b8 of the virtual machine VM3 are created.

The destination-side data D2, D4, D8, D10, D14, and D16 are the destination-side data Dj whose hash values match the hash values of the source-side data d2 to d5, d7, and d9 the copying of which is not necessary. In this case, the VM host HT2 reads out the destination-side data D2, D4, D8, D10, D14, and D16 from the memory blocks B2, B4, B8, B10, B14, and B16 and writes the destination-side data to an available area of the physical memory PM2. In this way, the destination-side data D2, D4, D8, D10, D14, and D16 are copied into the physical memory PM2, and the memory blocks b2 to b5, b7, and b9 of the virtual machine VM3 are created.

As a result, the memory blocks b1 to b9 of the virtual machine VM3 are created in the physical memory PM2 of the destination server SV2, and the migration of the virtual machine VM 3 ends. As described, the necessity of the copying of the source-side data di is checked beforehand and the data di that need not be copied is not transferred and thus the amount of data transferred between servers can be reduced.

There is a possibility that the hash value hi and the hash value Hj are identical (collide) even if the content of the source-side data di does not match the content of the destination-side data Dj. Thus, the coherency check of the source-side data di and the destination-side data Dj based only on the comparison of hash values may cause a situation where the source-side data di that need be copied is not transferred to the destination-side server SV.

In this case, a failure will occur that the destination-side data Dj the content of which is not identical to that of the source-side data di is copied and the memory block bi of the virtual machine VMk is created in the destination-side server SV. Thus, with checking methods 1 to 4 below, the coherency check of the source-side data di and the destination-side data Dj may further be performed.

In the description below, it is assumed that the destination-side server SV performs the comparison process with the comparing unit 505 unless specified otherwise.

### (Checking method 1)

Checking method 1 is described where the source-side data di and the destination-side data Dj are compared based on hash values yielded by different algorithms. With the first hash function and the second hash function, hash values of the source-side data di and the destination-side data Dj are calculated.

In the description below, a hash value yielded by the first hash function that has received the source-side data di is called "the first hash value h₁i", and a hash value yielded by the first hash function that has received the destination side data Dj is called "the first hash value H₁j". A hash value yielded by the second hash function that has received the source-side data di is called "the second hash value h₂i", and a hash value yielded by the second hash function that has received the destination-side data Dj is called "the second hash value H₂j".

The comparing unit 505 compares the hash values of the destination-side data Dj (for example, the first and the second hash values Hᵢj and H₂j) with the hash values of the source-side data di (for example, the first and the second hash values h₁i and h₂i).

For example, the comparing unit 505 compares, for each memory block Bj, the first hash value H₁j of the destination-side data Dj of the memory block Bj with the first hash value h₁i of the source-side data di of the memory block bi. When the first hash value H₁j matches the first hash value h₁i, the comparing unit 505 compares the second hash value H₂j of the destination-side data Dj with the second hash value h₂i of the source-side data di.

The determining unit 504 determines whether to copy the source-side data di of the memory block bi to the physical memory PM of the destination-side server SV based on the result of the comparison. The details of the checking method 1 will be described below.

A memory management table 800 is described that stores the first hash value h₁i and the second hash value h₂i of the source-side data di. The memory management table 800 is implemented by the memory 202 of the source-side server SV.

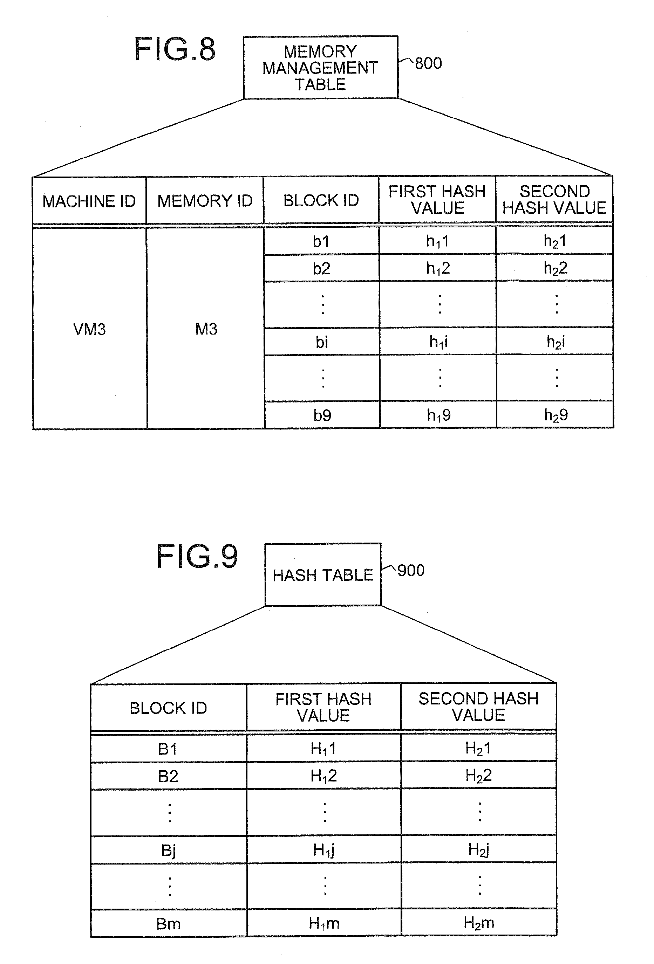

FIG. 8 is a diagram depicting one example of a memory management table (part II). In FIG. 8, the memory management table 800 includes fields of machine ID, memory ID, block ID, first hash value, and second hash value, and stores memory management data of the virtual machine VM3 by setting information on each field.

The first hash value is the first hash value h₁i yielded by the first hash function that has received the source-side data di stored in the memory block bi. The second hash value is the second hash value h₂i yielded by the second hash function that has received the source-side data di stored in the memory block bi.

With the memory management table 800, the first hash values h₁1 to h₁9 and the second hash values h₂1 to h₂9 of the source-side data d1 to d9 stored in the memory blocks b1 to b9 can be specified.

For example, the source-side VM host HT1 refers to the memory management table 800 and specifies the first and the second hash values h₁i and h₂i of the source-side data di. The VM host HT1 transmits to the destination-side VM host HT2 the first and the second hash values h₁i and h₂i of the specified source-side data di.

The destination-side VM host HT2 compares, for each memory block Bj, the first hash value H₁j of the destination-side data Dj of the memory block Bj with the first hash value h₁i of the source-side data di. A hash table 900 is described that stores the first hash value H₁j and the second hash value H₂j of the destination-side data Dj. The hash table 900 is implemented by, for example, the memory 202 of the destination-side server SV.

FIG. 9 is a diagram depicting one example of a hash table (part II). In FIG. 9, the hash table 900 stores the first hash value H₁j and the second hash value H₂j of the destination-side data Dj stored in the memory block Bj for each memory block Bj forming the physical memory PM2 of the destination-side server SV2.

For example, the destination-side VM host HT2 refers to the hash table 900 and compares, for each memory block Bj, the first hash value H₁j of the destination-side data Dj of the memory block Bj with the first hash value h₁i of the source-side data di. When the first hash value H₁j matches the first hash value h₁i, the VM host HT2 refers to the hash table 900 and compares the second hash value H₂j of the destination-side data Dj with the second hash value h₂i of the source-side data di. The VM host HT2 transmits a result of the comparison to the VM host HT1.

The VM host HT1 determines whether to copy the source-side data di of the memory block bi to the destination-side physical memory PM2 based on the result of the comparison. For example, when the second hash value H₂j matches the second hash value h₂i, the VM host HT1 determines that the copying of the source-side data di is not necessary. When the first hash value Hᵢj does not match the first hash value h₁i or when the second hash value H₂j does not match the second hash value h₂i, the VM host HT1 determines that the copying of the source-side data di is necessary.

As a result, the destination-side VM host HT2 receives, from the source-side VM host HT1, the source-side data di from which hash values have been created that have not matched at least one of the first and the second hash values H₁j and H₂j.

As described above, the checking of coherency between the source-side data di and the destination-side Dj with multiple hash values enables the avoidance of collision between the hash values of the source-side data di and the destination-side data Dj.

When the source-side server SV performs the comparison process with the comparing unit 505, the destination-side server SV transmits the first and the second hash values H₁j and H₂j of the destination-side data Dj to the source-side server SV in response to a request from the source-side server SV.

### (Checking method 2)

Checking method 2 will be described. In the checking method 2, coherency between partial data of the source-side data di and that of the destination-side data Dj whose hash values (for example, the first hash values described above) are identical is checked.

When the first hash value H₁j matches the first hash value h₁i, the comparing unit 505 compares partial data extracted from the destination-side data Dj according to a given extraction rule with partial data extracted from the source-side data di according to the extraction rule. In the below, partial data extracted from the source-side data di is called "partial data pi". Partial data extracted from the destination-side data Dj is called "partial data Pj".

The partial data pi of the source-side data di is extracted by, for example, the VM host HT1 of the source-side server SV1, from the source-side data di according to the given extraction rule. An example of the extraction rule is that a given number of bits from the head or the tail of the source-side data di is extracted.

The partial data Pj of the destination-side data Dj is extracted by, for example, the VM host HT2 of the destination-side server SV2 from the destination-side data Dj according to the given extraction rule. The partial data pi and Pj are extracted according to the same extraction rule. The partial data pi and Pj may be extracted when the source-side data di and the destination-side data Dj are recorded or updated.

The determining unit 504 determines, based on the result of the comparison, whether to copy the source-side data di of the memory block bi to the physical memory PM of the destination-side server SV. The details of the checking method 2 will be described below.

For example, when the first hash value H₁j matches the first hash value h₁i, the destination-side VM host HT2 compares the partial data Pj of the destination-side data Dj with the partial data pi of the source-side data di. For example, the partial data pi of the source-side data di is transmitted from the source-side VM host HT1 to the VM host HT2 in response to a request from the destination-side VM host HT2. The VM host HT2 transmits a result of the comparison to the VM host HT1.

The VM host HT1 determines whether to copy the source-side data di of the memory block bi to the destination-side physical memory PM based on the received result of the comparison. For example, when the partial data Pj matches the partial data pi, the VM host HT1 determines that the copying of the source-side data di is not necessary. When the partial data Pj does not match the partial data pi, the VM host HT1 determines that the copying of the source-side data di is necessary.

As a result, the destination-side VM host HT2 receives from the source-side VM host HT1, the source-side data di from which the partial data pi has been extracted that have not matched the partial data Pj of the destination-side data Dj.

As described above, a coherency check is performed by checking coherency between the partial data pi of the source-side data di and the partial data Pj of the destination-side data Dj. As a result, a failure due to the hash value collision between the source-side data di and the destination-side data Dj can be avoided.

When the source-side server SV performs the comparison process with the comparing unit 505, the destination-side server SV transmits the partial data Pj of the destination-side data Dj to the source-side server SV in response to a request from the source-side server SV.

A server which performs the comparison process of comparing the partial data pi of the source-side data di with the partial data Pj of the destination-side data Dj may be determined based on the communication quality of communication paths between servers SV

For example, when the first hash value H₁j matches the first hash value h₁i, the comparing unit 505 chooses a communication path having a higher or highest communication quality from among the bidirectional communication paths between servers SV. As an index for a communication quality, a transmission rate or an error rate of data can be used. The transfer rate represents the amount of data transferred per unit time (for example, bit per second).

The error rate represents the possibility that a bit different from transmission data is included in received data when data is transmitted and received. The transmission rate and the error rate may be measured beforehand and stored in the memory 202 or may be measured each time a communication path is selected.

For example, when the first hash value H₁j matches the first hash value h₁i, the VM host HT2 selects a communication path having a higher communication quality from among the bidirectional communication paths between servers SV1 and SV2.

When a communication path directed towards the server SV2 from the server SV1 is selected, the VM host HT2 transmits a request of the partial data pi of the source-side data di to the source-side VM host HT1. As a result, the VM host HT2 receives the partial data pi of the source-side data di from the VM host HT1 and compares the partial data pi of the source-side data di with the partial data Pj of the destination-side data Dj.

When a communication path directed from the server SV2 to the server SV1 is selected, the VM host HT2 transmits the partial data Pj of the destination-side data Dj to the source-side VM host HT1. As a result, the source-side VM host HT1 compares the partial data di of the source-side data di with the partial data Pj of the destination-side data Dj.

As can be seen, a communication path having a higher communication quality is selected from among bidirectional communication paths between the server SV1 and the server SV2 and an executing entity that compares the partial data pi with the partial data Pj is selected and thus the comparing process is performed swiftly and efficiently.

### (Checking method 3)

Checking method 3 will be described. In the checking method 3, coherency between the source-side data di and the destination-side data Dj is checked by checking coherency between the source-side data di and the destination-side data Dj whose hash values (for example, the first hash values described above) are identical.

When the first hash value H₁j matches the first hash value h₁i, the comparing unit 505 selects a communication path having a higher communication quality from among the bidirectional communication paths between servers SV. For example, when the first hash value H₁j matches the first hash value h₁i, the VM host HT2 selects a communication path having a better or best communication quality from among the bidirectional communication paths between the server SV1 and the server SV2.

When a communication path directed from the server SV2 to the server SV1 is selected, the VM host HT2 transmits the destination-side data Dj to the source-side VM host HT1. The source-side VM host HT1 compares the source-side data di with the destination-side data Dj. The VM host HT1 determines whether to copy the source-side data di of the memory block bi to the destination-side physical memory PM2 based on a result of the comparison.

For example, when the source-side data di matches the destination-side data Dj, the VM host HT1 determines that the copying of the source-side data di is not necessary. When the source-side data di does not match the destination-side data Dj, the VM host HT1 determines that the copying of the source-side data di is necessary.

As a result, the destination-side VM host HT2 receives from the source-side VM host HT1 the source-side data di that has not matched the destination-side data Dj.

In this way, coherency between the source-side data di and the destination-side data Dj is checked and thus a failure due to the collision between hash values of the source-side data di and the destination-side data Dj can be avoided.

From the viewpoint of reducing the amount of data transferred between servers, it would be meaningless to send the source-side data di from the source-side VM host HT1 to the destination-side VM host HT2 for the comparison of the data di with the destination-side data Dj. Therefore, when a communication path directed from the server SV1 to the server SV2 is selected, the VM host HT2 may transmit to the VM host HT1 a result of comparison that the first hash value H₁j matches the first hash value h₁i.

In this case, the VM host HT1 determines that the copying of the source-side data di of the memory block bi to the destination-side physical memory PM2 is necessary. In other words, when a communication path directed from the server SV1 to the server SV2 is selected, it is determined without the coherency check between the source-side data di and the destination-side data Dj that the copying of the source-side data di is necessary.

### (Checking method 4)

Checking method 4 will be described. In the checking method 4, coherency between the source-side data di and the destination-side data Dj is checked by checking coherency between data sources of the source-side data di and the destination-side data Dj whose hash values (for example, the first hash values described above) are identical.

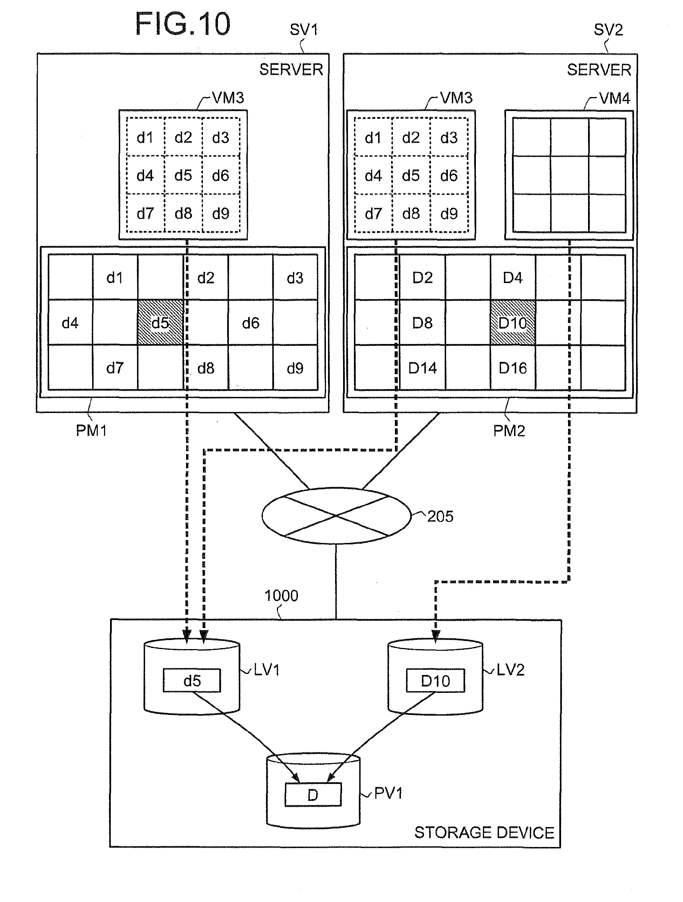

FIG. 10 is a diagram depicting one example of common storage that stores source-side data and destination-side data. In FIG. 10, a storage device 1000 is common storage that the source-side server SV1 and the destination-side server SV2 can access via the network 205.

The virtual machine VM 3 running on the sever SV1 is subject to the migration process. The first hash value of source-side data d5 of the memory block b5 that forms the virtual machine VM3 matches the first hash value of destination-side data D10 of the memory block B10 that forms the destination-side physical memory PM2 (h₁5=H₁10).

The source-side data d5 is stored in a logical volume LV1 of the storage device 1000. The destination-side data D10 is stored in a logical volume LV2 of the storage device 1000. The storage device 1000 has a function of eliminating duplicates and thus the logical blocks having the identical content are stored in the same physical block. In other words, when the source-side data d5 and the destination-side data D10 are data D that is stored in a volume PV1 having the same physical address, d5 and D10 are identical and thus the same data source.

When data sources of the source-side d5 and the destination-side data D10 are identical, the memory block B10 in which the destination-side data D10 is stored can be shared by virtual machines (for example, virtual machines VM3 and VM4) in the destination-side server SV2. Thus, the copying of the source-side data d5 to the destination-side physical memory PM2 becomes unnecessary.

The comparing unit 505 compares, when the first hash value H₁j matches the first hash value h₁i, an address of a storage area within the storage storing the destination-side data Dj with an address of a storage area within the storage storing the source-side data di. The storage may be the storage device 1000 that the destination-side server SV and the source-side server SV can access. The determining unit 504 determines whether to copy the source-side data di of the memory block bi to the physical memory PM of the destination-side server SV based on a result of the comparison.

For example, the VM host HT2 inquires at the VM host HT1 about a volume ID that identifies the logical volume LV1 that stores the source-side data d5. The VM host HT2 inquires at the storage device 1000 about a physical address corresponding to the logical volume LV1 that stores the source-side data d5.

The VM host HT2 inquires at the storage device 1000 about a physical address corresponding to the logical volume LV2 that stores the destination-side data D10. The VM host HT2 compares the physical address corresponding to the logical volume LV1 storing the source-side data d5 with the physical address corresponding to the logical volume LV2 storing the destination-side data D10. The VM host HT2 transmits a result of the comparison to the VM host HT1.

The VM host HT1 determines whether to copy the source-side data di of the memory block bi to the destination-side physical memory PM2 based on the received comparison result. For example, when the physical address of the logical volume LV1 matches the physical address of the logical volume VL2, the VM host HT1 determines that the copying of the source-side data d5 is not necessary. As a result, for example, the virtual machine VM3 and VM 4 share the memory block B10 that stores the destination-side data D10 in the destination-side server SV2.

When the physical address of the logical volume LV1 does not match the physical address of the logical volume LV2, the VM host HT1 determines that the copying of the source-side data d5 is necessary. As a result, the destination-side VM host HT2 receives from the source-side VM host HT1 the source-side data di that is stored in the logical volume LV1 whose physical address does not match the physical address of the logical volume LV2 that stores the destination-side data Dj.

In this way, a coherency check between data sources of the source-side data di and the destination-side data Dj is checked and thus a failure due to the collision of hash values of the source-side di and the destination-side data Dj can be avoided.

When the first hash value H₁j matches the first hash value h₁i, some of the checking methods 1 to 4 may be combined to check coherency between the source-side data di and the destination-side data Dj.

A data migration process of a server SV according to the second embodiment will be described. A data migration process on the source-side server SV will be described first.

### (Data migration process on source-side server)

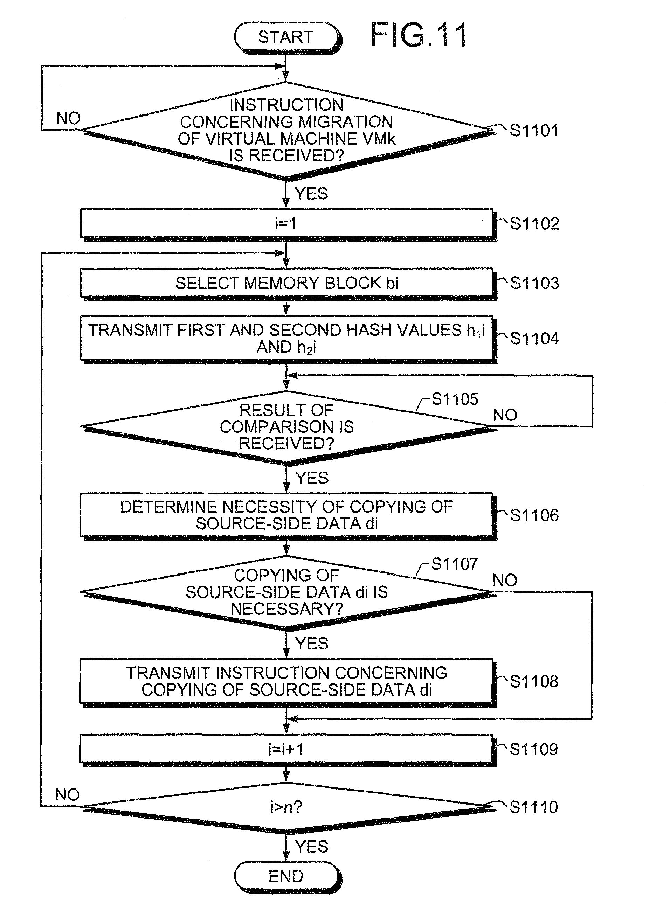

FIG. 11 is a flowchart depicting a data migration process of the source-side server according to the second embodiment. In the flowchart of FIG. 11, it is determined whether the receiving unit 501 has received an instruction concerning the migration of a virtual machine VMk (step S1101).

The receiving unit 501 waits for an instruction concerning the migration of a virtual machine VMk (step S1101: NO). When the receiving unit 501 receives the instruction (step S1101: YES), the selecting unit 502 initializes a variable i of a memory block bi by setting i as i=1 (step S1102). The memory Mk of the virtual machine VMk is divided into memory blocks bi.

The selecting unit 502 selects one memory block bi from among the memory blocks b1 to bn that forms the memory Mk of the virtual machine VMk (step S1103). The transmitting unit 503 transmits the first and the second hash values h₁i and h₂i stored in the selected memory block bi to the destination-side server SV (step S1104).

It is determined whether the receiving unit 501 has received from the destination-side server SV the result of the comparison between the hash value hi of the source-side data di and the hash value Hj of each destination-side data Dj stored in each memory block 120-j that forms the destination-side physical memory PM (step S1105).

The process waits until the result of the comparison is received (step S1105: NO). When the result of the comparison is received (step S1105: YES), the determining unit 504 determines whether to copy the source-side data di to the physical memory PV of the destination-side server SV based on the result of the comparison (step S1106).

When the copying of the source-side data di is necessary (step S1107: YES), the transmitting unit 503 transmits to the destination-side server SV an instruction of copying the source-side data di (step S1108). The selecting unit 502 increments i of the memory block bi (step S1109) and determines whether i is larger than n (step S1110).

When i is less than or equal to n (step S1110: NO), the process returns to step S1103. When i is larger than n (step S1110: YES), the process according to this flowchart ends. When the copying of the source-side data di is not necessary at step S1107 (step S1107: NO), the process goes to step S1109.

In this way, the necessity of copying the source-side data di of the memory block bi can be determined for each memory block bi that forms the memory Mk of the virtual machine VMk that is subject to migration.

A data migration process on the destination-side server SV will be described next.

### (Data migration process on destination-side server)

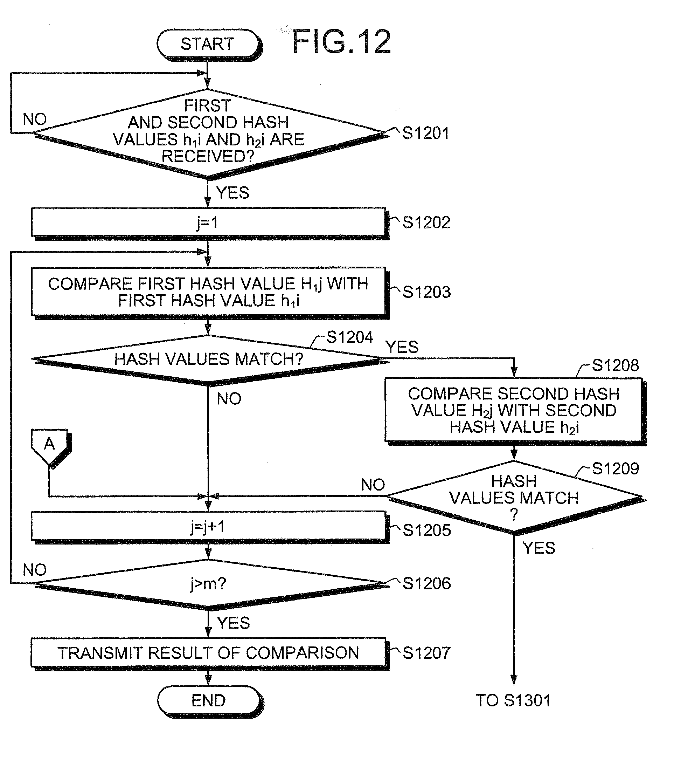

FIG. 12 to FIG. 14 are flowcharts depicting one example of a data migration process on the destination-side server according to the second embodiment. In the flowchart of FIG. 12, it is determined whether the receiving unit 501 has received from the source-side server SV the first and the second hash values h₁i and h₂i of the source-side data di (step S1201).

The process waits until the first and the second hash values h₁i and h₂i are received (step S1201: NO). When the hash values are received (step S1201: YES), the comparing unit 505 initializes, by setting j as j=1, a variable j of a memory block Bj that forms the destination-side physical memory PM (step S1202).

The comparing unit 505 compares the first hash value H₁j of the destination-side data Dj stored in the memory block Bj with the first hash value h₁i of the source-side data di (step S1203). The comparing unit 505 determines whether the first hash value H₁j of the destination-side data Dj has matched the first hash value h₁i of the source-side data di (step S1204).

When the first hash value H₁j does not match the first hash value h₁i (step S1204: NO), the comparing unit 505 increments j of the memory block Bj (step S1205) and determines whether j is larger than m (step S1206). When j is less than or equal to m (step S1206: NO), the process returns to step S1203.

When j is larger than m (step S1206: YES), the transmitting unit 503 transmits to the source-side server SV a result of the comparison conducted by the comparing unit 505 (step S1207), and the process according to this flowchart ends.

When the first hash value H₁j matches the first hash value h₁i at step S1204 (step S1204: YES), the comparing unit 505 compares the second hash value H₂j of the destination-side data Dj stored in the memory block Bj with the second hash value h₂i of the source-side data di (step S1208).

The comparing unit 505 determines whether the second hash value H₂j of the destination-side data Dj matches the second hash value h₂i of the source-side data di (step S1209). When the second hash value H₂j does not match the second hash value h₂i (step S1209: NO), the process goes to step S1205.

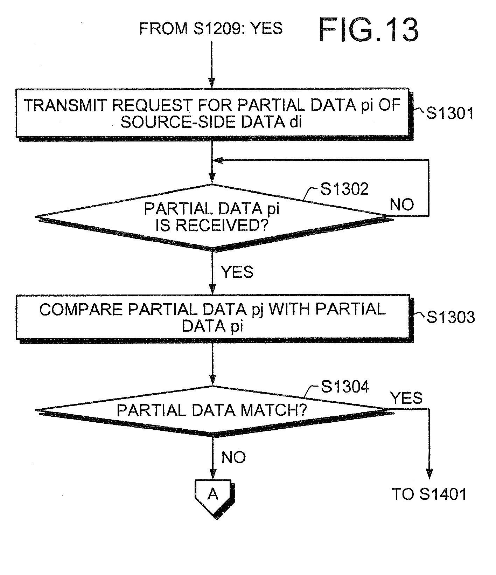

When the second hash value H₂j matches the second hash value h₂i (step S1208: YES), the process goes to step S1301 of FIG. 13.

In the flowchart of FIG. 13, the transmitting unit 503 transmits to the source-side server SV a request of the transmission of the partial data pi of the source-side data di (S1301). It is determined whether the receiving unit 501 has received from the source-side server SV the partial data pi of the source-side data di (step S1302).

The process waits until the partial data pi is received (step S1302: NO). When the partial data is received (step S1302: YES), the comparing unit 505 compares the partial data Pj of the destination-side data Dj with the partial data pi of the source-side data di (step S1303).

The comparing unit 505 determines whether the partial data Pj of the destination-side data Dj matches the partial data pi of the source-side data di (step S1304). When the partial data Pj does not match the partial data pi (step S1304: NO), the process goes to step S1205 of FIG. 12.

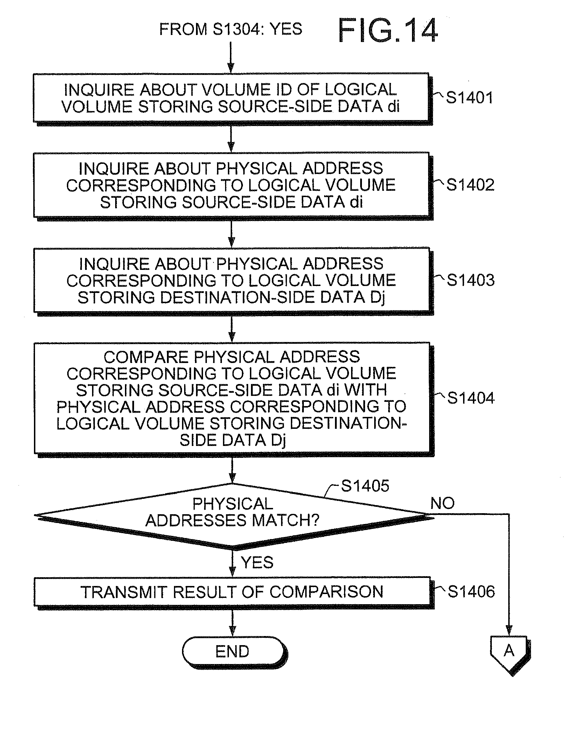

When the partial data Pj matches the partial data pi (step S1304: YES), the process goes to step S1401 of FIG. 14.

In the flowchart of FIG. 14, the comparing unit 505 inquires at the source-side server SV about a volume ID of a logical volume storing the source-side data di (step S1401). The comparing unit 505 inquires at the storage device 1000 about a physical address corresponding to a logical volume storing the source-side data di (step S1402).

The comparing unit 505 inquires at the storage device 1000 about a physical address corresponding to a logical volume storing the destination-side data Dj (step S1403). The comparing unit 505 compares the physical address corresponding to the logical volume storing the source-side data di with the physical address corresponding to the logical volume storing the destination-side data Dj (step S1404).

The comparing unit 505 determines whether the physical address of the sources-side data di matches the physical address of the destination-side data Dj (step S1405). When the physical address of the source-side data di does not match the physical address of the destination-side data Dj (step S1405: NO), the process goes to step S1205 of FIG. 12.

When the physical address of the source-side data di matches the physical address of the destination-side data Dj (step S1405: YES), the transmitting unit 503 transmits to the source-side server SV a result of the comparison conducted by the comparing unit 505 (step S1406), and the process according to this flowchart ends.

In this way, information (result of the comparison) for checking coherency between the source-side data di stored in the source-side memory block bi and the destination-side data Dj stored in the destination-side memory block Bj can be transmitted to the source-side server SV.

When the receiving unit 501 receives the instruction of copying the source-side data di after the result of the comparison is transmitted to the source-side server SV at step S1207, the writing unit 506 writes the source-side data di into the destination-side physical memory PM.

When the result of the comparison is transmitted to the source-side server SV at step S1406, the writing unit 506 writes into the destination-side physical memory PM the destination-side data Dj whose hash value matches the hash value of the source-side data di. The context switch is performed, for example, after the memory blocks b1 to bn that forms the memory Mk of the virtual machine VMk is created on the physical memory PM of the destination-side server.

As described above, according to the server SV of the second embodiment, the necessity of the copying of the source-side data di of the memory block bi can be determined for each memory block bi that forms the memory Mk of the virtual machine VMk subject to the migration. As a result, unnecessary coping of data di can be prevented and the amount of data transferred between servers can be reduced at live migration.

According to the server SV, the hash value hi of the source-side data di is compared with the hash value Hj of the destination-side data Dj and coherency between the source-side data di and the destination-side data Dj is checked and the necessity of the copying of the data di of the memory block bi can be determined.

According to the server SV, coherency between the source-side data di and the destination-side data Dj are checked with multiple different hash values and thus a failure due to the collision between the hash values of the source-side data di and the destination-side data Dj can be avoided.

According to the server SV, coherency can be checked by checking coherency between the partial data pi and Pj of the source-side data di and the destination-side data Dj and thus a failure due to the collision between the hash values of the source-side data di and the destination-side data Dj can be avoided.

According to the server SV, the comparison between the partial data pi and the partial data Pj is performed by selecting a communication path having a better communication quality from among bidirectional communication paths between the server SV1 and the server SV2 and thus coherency between the partial data pi and the partial data Pj can be checked swiftly and efficiently.

According to the server SV, coherency between the source-side data di and the destination-side data Dj is checked and thus, a failure due to the collision between the hash values of the source-side data di and the destination-side data Dj can be avoided.

### (Third embodiment)

A server SV according to the third embodiment will be described. In the third embodiment, the necessity of the copying of the source-side data di is checked based on attribute information of the source-side data di stored in a memory block bi for each memory block bi of the virtual machine VMk that is subject to migration. Descriptions identical to those of the first and the second embodiments are omitted.

A memory block table will be described. An OS (hereinafter "guest OS") being executed by the virtual machine VMk on a server SV uses the memory block table to manage the memory blocks b1 to bn that forms the memory block Mk. A memory block table 1500 is taken as an example that is used by a guest OS3 that is being executed by the virtual machine VM3 on the server SV1. The memory block table 1500 is implemented by, for example, the memory 202 of FIG. 2.

### (Content of memory block table 1500)

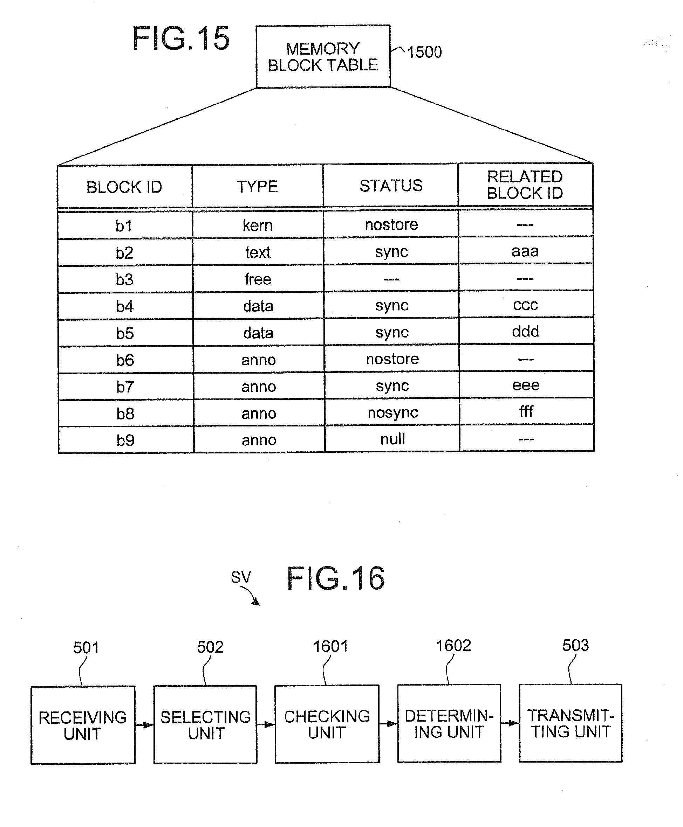

FIG. 15 is a diagram depicting one example of a memory block table. In FIG. 15, the memory block table 1500 includes fields of block ID, type, status, and related block ID. Management data for each memory block bi are stored by setting information in each field.

The block ID is an identifier of a memory block bi that forms the memory Mk of the virtual machine VMk. The type is data type of data di stored in the memory block bi. In FIG. 15, "kern" represents kernel data. The kernel data includes, for example, the memory block table 1500. "text" represents text data such as a program code. "free" represents a memory block put into free memory. "data" represents data in a data area of a program. "anno" represents data (anonymous data) other than "kern", "test", "free", and "data".

The status indicates a state of data di stored in the memory block bi. In FIG. 15, "nostore" represents a state where there is no backing store. The backing store is a storage area within a swap region that stores backup data of data di. "sync" indicates the synchronization with other memory blocks different from the memory block bi. "nosync" indicates no synchronization with other memory blocks different from the memory block bi. "null" indicates that the memory block bi has been initialized.

The related block ID is a block ID of other memory blocks that stores data related to data di stored in the memory block bi. Other memory blocks are, for example, memory blocks on a file system or memory blocks within the swap region.

### (Functional configuration of server SV)

FIG. 16 is a diagram depicting a functional configuration of a server according to the third embodiment. In FIG.16, the server SV includes the receiving unit 501, the selecting unit 502, the transmitting unit 503, a checking unit 1601, and a determining unit 1602. Each functional component is implemented by the CPU 201 executing a program stored in the memory 202 of FIG. 2 or by the network I/F 203. For example, each functional component is implemented by the VM hosts HT1, HT2 of FIG. 3 or the guest OSk executed on the virtual machine VMk. Results of processes at each functional component are stored in the memory 202.

The checking unit 1601 checks, based on attribute information of the source-side data di stored in the memory block bi, whether the memory block bi is a vacant area.
For example, the guest OS3 of the virtual machine VM3 refers to the memory block table 1500 and checks whether the memory block bi is a memory block that has been put into the free memory. More specifically, when "free" has been set in the type field of the memory block bi, the guest OS3 determines that the memory block bi is a memory block that has been put into the free memory.

The determining unit 1602 determines whether to copy the source-side data di to the physical memory PM of the destination-side server SV based on a result of the determination. For example, when it is determined that the memory block bi is a memory block that has been put into the free memory, the guest OS3 determines that the copying of the source-side data di is not necessary.

The guest OS3 changes the status of the memory block bi to a state where page stealing has been performed. The state that page stealing has been performed is, for example, a state where the memory block bi is stolen by other virtual machines VM. Information concerning the status change to the state that page stealing has been performed is transferred from the VM host HT1 to the VM host HT2.

As a result, for example, the status of the memory block bi is reflected on the memory block table 1500 that is used by the guest OS3 of the virtual machine VM3 running on the destination-side server SV2. When the memory block bi in the page-stolen state is accessed, the guest OS3 obtains an available area in the physical memory PM2 and creates a memory block bi.

The checking unit 1601 checks, based on the attribute information concerning the source-side data id stored in the memory block bi, whether the source-side data di is stored in a storage device which the destination-side server SV can access. For example, the guest OS3 of the virtual machine VM 3 refers to the memory block table 1500 and checks whether the sources-side data di is stored in a file system which the destination-side server SV can access.

More specifically, the guest OS3 checks whether "text" or "data" has been set in the type field of the memory block bi. When "text" or "data" has been set, the guest OS3 further checks whether "sync" has been set in the status field of the memory block bi. When "sync" has been set, the guest OS3 determines that the source-side data di is stored in the file system.

The guest OS3 determines that the copying of the source-side data di is not necessary. The guest OS3 changes the status of the memory block bi to a state where page stealing has been performed. When the memory block bi in the page-stolen state is accessed, the guest OS3 obtains an available area in the physical memory PM2, acquires data di from the file system, and creates a memory block bi.

The checking unit 1601 checks, based on the attribute information concerning the source-side data di stored in the memory block bi, whether the source-side data di has been backed up in a storage area different from the memory Mk. The storage area may reside in a storage device such as a magnetic disk or an optical disk of the source-side server or a storage device which the source-side server SV or the destination-side server SV can access.

For example, the guest OS3 of the virtual machine VM3 refers to the memory block table 1500 and checks whether there is a backing store of the source-side data di. More specifically, the guest OS3 checks whether "anno" has been set in the type field of the memory block bi. When "anno" has been set, the guest OS3 further checks whether the "sync" has been set in the status field of the memory block bi.

When "sync" has been set, the guest OS3 determines that there is a backing store of the source-side di. The guest OS3 determines that the copying of the source-side data di is not necessary. The guest OS3 changes the status of the memory block bi to a state where page stealing has been performed.

When the memory block bi in the page-stolen state is accessed, the guest OS3 obtains an available area in the physical memory PM2, acquires data di from the swap region, and creates a memory block bi.

The checking unit 1601 checks, based on the attribute information of the source-side data di stored in the memory block bi, whether the memory block bi has been initialized. For example, the guest OS3 of the virtual machine VM3 refers to the memory block table 1500 and checks whether the memory block bi has been initialized.

For example, the guest OS3 checks whether "null" has been set in the status field of the memory block bi. When "null" has been set, the guest OS3 determines that the memory block bi has been initialized. The guest OS3 determines that the copying of the source-side data di is not necessary.

The guest OS3 changes the status of the memory block bi to a state where page stealing has been performed. When the memory block bi in the page-stolen state is accessed, the guest OS3 obtains an available area in the physical memory PM2 and creates a memory block bi.

A data migration process of a server SV according to the third embodiment will be described.

### (Data migration process of server SV)

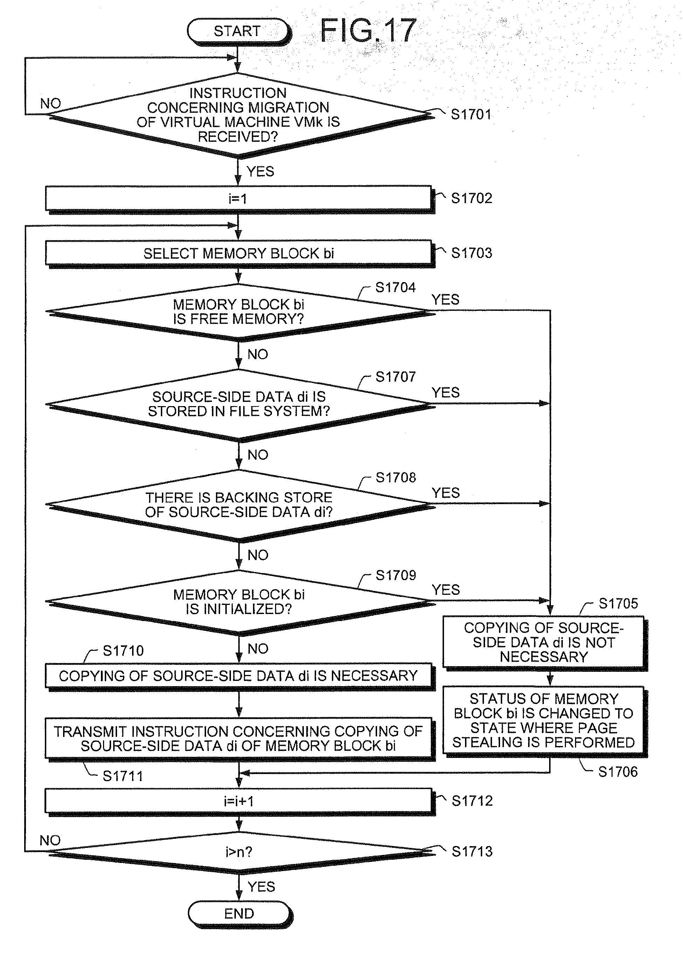

FIG. 17 is a flowchart depicting one example of a data migration process of a server according to the third embodiment. In the flowchart of FIG. 17, it is determined whether the receiving unit 501 has received an instruction concerning the migration of a virtual machine VMk (step S1701).

The process waits until the receiving unit 501 receives the instruction of the migration of the virtual machine VMk (step S1701: NO). When the instruction of migration is received (step S1701: YES), the selecting unit 502 initializes a variable i of a memory block bi by setting i as i=1 (step S1702). The memory block bi forms the memory Mk of the virtual machine VMk.

The selecting unit 502 selects a memory block bi from among the memory blocks b1 to bn that forms the memory Mk of the virtual machine VMk (step S1703). The checking unit 1601 checks whether the memory block bi is a memory block that has been put into free memory (step S1704).

When the memory block bi is a memory block put into free memory (step S1704: YES), the determining unit 1602 determines that the copying of the source-side data di is not necessary (step S1705). The determining unit 1602 changes the status of the memory block bi to a state where page stealing has been performed (step S1706), and the process goes to step S1712.

When the memory bloc bi is not a memory block that has been put into free memory at step S1704 (step S1704: NO), the checking unit 1601 checks whether the source-side data di is stored in the file system (step S1707). When the source-side data di has been stored in the file system (step S1707: YES), the process goes to the step S1705.

When the source-side data di has not been stored in the file system (step S1707: NO), the checking unit 1601 checks whether there is a backing store of the source-side data di (step S1708). When there is a backing store of the source-side data di (step S1708: YES), the process goes to step S1705.

When there is no backing store of the source-side data di (step S1708: NO), the checking unit 1601 checks whether the memory block bi has been initialized (step S1709). When the memory block bi has been initialized (step S1709: YES), the process goes to step S1705.

When the memory block bi has not been initialized (step S1709: NO), the determining unit 1602 determines that the copying of the source-side data di is necessary (step S1710). The transmitting unit 503 transmits to the destination-side server SV the instruction concerning the copying of the source-side data di of the memory block bi (step S1711).

The selecting unit 502 increments i of the memory block bi (step S1712), and determines whether i is larger than n (step S1713). When i is less than or equal to n (step S1713: NO), the process returns to step S1703. When i is larger than n (step S1713: YES), the process according to the flowchart ends.

As a result, for each memory block bi to which the memory Mk of the virtual machine VMk subject to migration, is divided, the necessity of the copying of the source-side data di of the memory block bi can be determined. The processes of step S1706 and step S1711 may be executed together after the necessity of the copying of all memory blocks b1 to bn is checked.

As described above, according to the server SV of the third embodiment, for each memory block bi of the virtual machine VMk, the necessity of the copying of the source-side data di is checked based on the attribute information of the source-side data di stored in the memory block bi. As a result, unnecessary copying of data di is prevented and the amount of data transferred between servers can be reduced in a live migration process.

According to the server SV, it is checked whether a memory block bi is a memory block that has been put into free memory and thus the necessity of the source-side data di stored in the memory block bi can be determined.

According to the server SV, it is checked whether the source-side data di stored in the memory block bi is stored in the file system that the destination-side server SV can access. As a result, the necessity of the copying of the source-side data di can be determined.

According to the server SV, it is checked whether there is a backing store of the source-side data di stored in the memory block bi. As a result, the necessity of the copying of the source-side data di can be determined.

According to the server SV, it is checked whether a memory block bi has been initialized. As a result, the necessity of the copying of the source-side data di stored in the memory block bi can be determined.

The data migration method in the present embodiments can be implemented by a computer, such as a personal computer and a workstation, executing a program that is prepared in advance. The data migration program is recorded on a computer-readable recording medium such as a hard disk, a flexible disk, a CD-ROM, an MO, and a DVD, and is executed by being read out from the recording medium by a computer. The program can be distributed through a network such as the Internet.

### DESCRIPTIONS OF LETTERS OR NUMERALS

- 101, 102: computing device
- 110, 110-1 to 110-4, 120, 120-1 to 120-9: storage area
- 300: network system
- 400, 800: memory management table
- 501: receiving unit
- 502: selecting unit
- 503: transmitting unit
- 504, 1602: determining unit
- 505: comparing unit
- 506: writing unit
- 600, 900: hash table
- 1500: memory block table
- 1601: checking unit
- SV, SV1, SV2: server
- VM, VMk: virtual machine

## Claims

1. A data migration program that causes a destination-side computing device that performs data migration between computing devices to perform:
first receiving from a source-side computing device, a hash value of source-side data stored in one memory block that forms a source-side memory;
comparing for each memory block forming a destination-side memory, a hash value of destination-side data stored in the memory block and the hash value of the source-side data received at the first receiving;
transmitting a comparison result yielded at the comparing to the source-side computing device; and
second receiving from the source-side computing device, the source-side data from which the hash value that does not match the hash value of the destination-side data is calculated.

2. The data migration program according to claim 1, wherein
at the first receiving,
multiple hash values of the source-side data that are calculated with multiple different hash functions are received from the source-side computing device,
at the comparing,
for each hash function, a hash value of the destination-side data calculated with the hash function is compared with the hash value of the source-side data received at the first receiving, and
at the second receiving,
the source-side data whose hash value does not match at least one of the hash values of the destination-side data that are calculated with the multiple different hash values is received from the source-side computing device.

3. The data migration program according to claim 1, wherein
at the first receiving,
partial data extracted from the source-side data based on a given extraction rule is received from the source-side computing device,
at the comparing,
when the hash value of the destination-side data matches the hash value of the source-side data, partial data extracted from the destination-side data based on the given extraction rule is compared with the partial data of the source-side data received at the first receiving, and
at the second receiving,
the source-side data whose partial data does not match the partial data of the destination-side data is received from the source-side computing device.

4. The data migration program according to claim 1, where the data migration program further causes the destination-side computing device to perform
selecting a communication path having a best communication quality among bidirectional communication paths between the destination-side computing device and the source-side computing device when the hash value of the destination-side data match the hash value of the source-side data,
at the transmitting,
when a communication path directed towards the source-side computing device from the destination-side computing device is selected at the selecting, partial data extracted from the destination-side data based on a given extraction rule is transmitted to the source-side computing device, and
at the second receiving
the source-side data whose partial data does not match the partial data of the destination-side data is received from the source-side computing device.

5. The data migration program according to claim 4, wherein
at the transmitting,
when the communication path directed towards the source-side computing device from the destination-side computing device is selected, the destination-side data is transmitted to the source-side computing device, and
at the second receiving,
the source-side data that does not match the destination-side data is received from the source-side computing device.

6. The data migration program according to claim 1, wherein
at the comparing,
when the hash value of the destination-side data matches the hash value of the source-side data, an address of a storage area that stores the destination-side data is compared with an address of a storage area that stores the source-side data within storage which the destination-side computing device and the source-side computing device can access, and
at the second receiving,
the source-data stored in the storage area whose address does not match the address of the storage area that stores the source-side data is received from the source-side computing device.

7. A data migration program that causes a source-side computing device that performs data migration between computing devices to perform:
first transmitting for each memory block that forms source-side memory, a hash value of the source-side data stored in the memory block to the destination-side computing device;
receiving from the destination-side computing device, a result of comparison between the hash value of the source-side data transmitted at the first transmitting and hash values of each destination-side data stored in each memory block forming destination-side memory;
determining necessity of copying the source-side data to the destination-side memory based on the result of comparison received at the receiving; and
second transmitting the source-side data to the destination-side computing device when the copying is determined to be necessary at the determining.

8. A data migration program that causes a destination-side computing device that performs data migration between computing devices to perform:
transmitting hash values of destination-side data stored in memory blocks that forms destination-side memory to a source-side computing device; and
receiving from the source-side computing device, the source-side data whose hash value does not match the hash values of the destination-side data.

9. A data migration program that causes a source-side computing device that performs data migration between computing devices to perform:
receiving from a source-side computing device, hash values of destination-side data stored in memory blocks that form destination-side memory;
comparing for each memory block that form source-side memory, a hash value of source-side data stored in each memory block and the hash values of the destination-side data received at the receiving;
determining necessity of copying the source-side data to the destination-side memory based on a result of comparison at the comparing; and
transmitting the source-side data to the destination-side computing device when the copying is determined to be necessary at the determining.

10. A data migration program that causes a source-side computing device that performs data migration between computing devices to perform:
determining for each memory block that forms source-side memory and based on attribute information of source-side data stored in the memory blocks, necessity of copying the source-side data to destination-side memory; and
transmitting the source-side data to a destination-side computing device when the copying is determined to be necessary at the determining.

11. The data migration program according to claim 10, further causing the source-side computing device to perform
checking, based on the attribute information of the source-side data, whether the memory block storing the source-side data is an available memory block that is not in use,
wherein at the checking,
when the memory block is determined to not be an available memory block, the copying of the source-side data is determined to be necessary.

12. The data migration program according to claim 11, wherein
at the checking,
whether the source-side data is stored in a storage device that the destination-side computing device can access is checked, based on the attribute information of the source-side data, and
at the determining,
the copying of the source-side data is determined to be necessary when the source-side data is not stored in the storage device that the destination-side computing device can access.

13. The data migration program according to claim 12, wherein
at the checking,
whether the source-side data is backed up in a storage area different from the source-side memory is checked, based on the attribute information of the source-side data, and
at the determining,
the copying of the source-side data is determined to be necessary when the source-side data is not backed up in a storage area different from the source-side memory.

14. The data migration program according to claim 13, wherein
at the checking,
whether the memory block that stores the source-side data is initialized is checked, based on the attribute information of the source-side data, and
at the determining,
the copying of the source-side data is determined to be necessary when the memory block that stores the source-side data is not initialized.

15. A computing device that performs data migration between computing devices, the computing device comprising:
a first receiving unit configured to receive from a source-side computing device a hash value of source-side data stored in one memory block that forms source-side memory;
a comparing unit configured to compare, for each memory block forming a destination-side memory, a hash value of destination-side data stored in the memory block with the hash value of the source-side data received by the first receiving unit;
a transmitting unit configured to transmit a comparison result yielded by the comparing unit to the source-side computing device; and
a second receiving unit configured to receive, from the source-side computing device, the source-side data from which the hash value that does not match the hash value of the destination-side data is calculated.

16. A computing device that performs data migration between computing devices, the computing device comprising:
a first transmitting unit configured to transmit, for each memory block that forms source-side memory, a hash value of the source-side data stored in the memory block to the destination-side computing device;
a receiving unit configured to receive, from the destination-side computing device, a result of comparison between the hash value of the source-side data transmitted at the first transmitting and hash values of each destination-side data stored in each memory block forming destination-side memory;
a determining unit configured to determine necessity of copying of the source-side data to the destination-side memory based on the result of comparison received by the receiving unit; and
a second transmitting unit configured to transmit the source-side data to the destination-side computing device when the copying is determined to be necessary by the determining unit.

17. A computing device that performs data migration between computing devices, the computing device comprising:
a transmitting unit configured to transmit hash values of destination-side data stored in memory blocks that forms destination-side memory to a source-side computing device; and
a receiving unit configured to receive, from the source-side computing device, the source-side data whose hash value does not match the hash values of the destination-side data.

18. A computing device that performs data migration between computing devices, the computing device comprising:
a receiving unit configured to receive, from a source-side computing device, hash values of destination-side data stored in memory blocks that form destination-side memory;
a comparing unit configured to compare, for each memory block that form source-side memory, a hash value of source-side data stored in each memory block with the hash values of the destination-side data received by the receiving unit;
a determining unit configured to determine necessity of copying of the source-side data to the destination-side memory based on a result of comparison by the comparing unit; and
a transmitting unit configured to transmit the source-side data to the destination-side computing device when the copying is determined to be necessary by the determining unit.

19. A computing device that performs data migration between computing devices, the computing device comprising:
a determining unit configured to determine, for each memory block that forms source-side memory, based on attribute information of source-side data stored in the memory blocks, necessity of copying of the source-side data to destination-side memory; and
a transmitting unit configured to transmit the source-side data to a destination-side computing device when the copying is determined to be necessary by the determining unit.

20. A data migration method executed by a computing device that performs data migration between computing devices, the data migration method comprising:
first receiving from a source-side computing device a hash value of source-side data stored in one memory block that forms source-side memory;
comparing, for each memory block forming a destination-side memory, a hash value of destination-side data stored in the memory block with the hash value of the source-side data received at the first receiving;
transmitting a comparison result yielded at the comparing to the source-side computing device;
second receiving, from the source-side computing device, the source-side data from which the hash value that does not match the hash value of the destination-side data is calculated.

21. A data migration method executed by a computing device that performs data migration between computing devices, the data migration method comprising:
first transmitting, for each memory block that forms source-side memory, a hash value of the source-side data stored in the memory block to the destination-side computing device;
receiving, from the destination-side computing device, a result of comparison between the hash value of the source-side data transmitted at the first transmitting and hash values of each destination-side data stored in each memory block forming destination-side memory;
determining necessity of copying of the source-side data to the destination-side memory based on the result of comparison received at the receiving; and
second transmitting the source-side data to the destination-side computing device when the copying is determined to be necessary at the determining.

22. A data migration method executed by a computing device that performs data migration between computing devices, the data migration method comprising:
transmitting hash values of destination-side data stored in memory blocks that forms destination-side memory to a source-side computing device; and
receiving, from the source-side computing device, the source-side data whose hash value does not match the hash values of the destination-side data.

23. A data migration method executed by a computing device that performs data migration between computing devices, the data migration method comprising:
receiving, from a source-side computing device, hash values of destination-side data stored in memory blocks that form destination-side memory;
comparing, for each memory block that form source-side memory, a hash value of source-side data stored in each memory block with the hash values of the destination-side data received at the receiving;
determining necessity of copying of the source-side data to the destination-side memory based on a result of comparison at the comparing; and
transmitting the source-side data to the destination-side computing device when the copying is determined to be necessary at the determining.

24. A data migration method executed by a computing device that performs data migration between computing devices, the data migration method comprising:
determining, for each memory block that forms source-side memory, based on attribute information of source-side data stored in the memory blocks, necessity of copying of the source-side data to destination-side memory; and
transmitting the source-side data to a destination-side computing device when the copying is determined to be necessary at the determining.
